# EUROPEAN PATENT SPECIFICATION

(11) **EP 1 826 996 B1**
(45) Date of publication and mention of the grant of the patent: **12.08.2015**
(21) Application number: 05795102.2
(22) Date of filing: 29.09.2005
(51) Int. Cl.: H04L 29/06, H04M 15/00

(54) **A METHOD FOR ENSURING THE SERVICE PLATFORM ACQUIRING THE INFORMATION OF THE USER TERMINAL BY MULTI-APPLICATION PROTOCOL**
VERFAHREN ZUM SICHERSTELLEN, DASS DIE DIENSTPLATTFORM DIE INFORMATIONEN DES BENUTZERENDGERÄTS DURCH EIN MEHRFACH-ANWENDUNGSPROTOKOLL ERHÄLT
PROCEDE PERMETTANT A LA PLATE-FORME DE SERVICES D'ACQUERIR LES INFORMATIONS DU TERMINAL UTILISATEUR PAR UN PROTOCOLE MULTIPLICATION

(30) Priority: 19.11.2004 CN 200410091560
(43) Date of publication of application: 29.08.2007
(73) Proprietor: China Mobile Communications Corporation, Xicheng District Beijing 100032 (CN)
(72) Inventor: ZHU, Chunmei, Xicheng District, Beijing 100032 (CN); WU, Wei, Xicheng District, Beijing 100032 (CN); TANG, Jianfeng, Xicheng District, Beijing 100032 (CN)
(74) Representative: Price, Nigel John King
(86) International application number: PCT/CN2005/001602
(87) International publication number: WO 2006/053478

(56) References cited:
- EP-A1- 0 924 630
- WO-A1-03/107623
- CN-A- 1 367 974
- CN-A- 1 399 836
- US-A1- 2002 138 601

## Description

### Field of the Invention

The present invention relates to a method for acquiring user terminal information in the wireless communication network, and more particularly to a method for ensuring the service platform the acquisition of the user terminal information under multiple application protocols, which belongs to the technical field of communication technology.

### Background of the Invention

The mobile network can only acquire the flow capacity information of the data service, and the user usage information of the data service, for instance the times of successful download, the number of pieces of message successfully sent and so on, can only be obtained from the service platform. Therefore, the billing based on the data service platform must take it into account that how to allow the service platform to acquire the user's cellphone number.

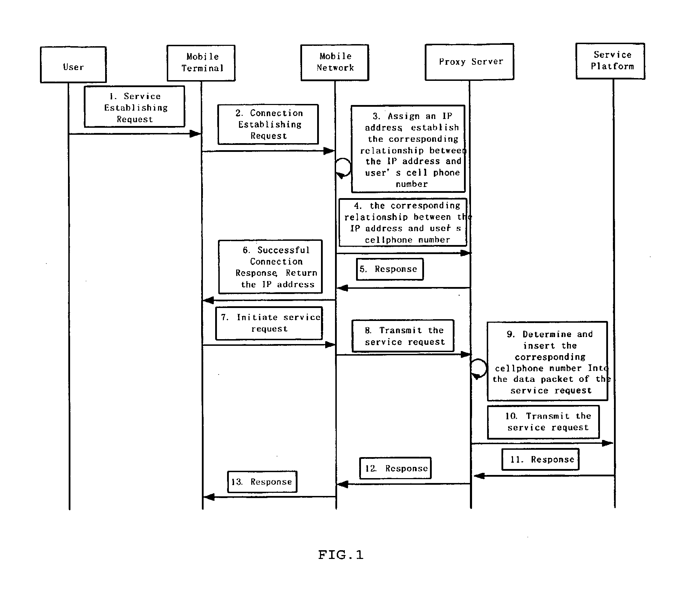

At present, the usual way is to add a proxy server in the mobile network. As shown in FIG.1, when the user terminal establishes the connection with the network and the network assigns an IP address to the user terminal, the corresponding relationship between the IP address and the user terminal is accordingly set up in the proxy server. When the user terminal initiates the application layer service request, this request is firstly transmitted to the proxy server. The proxy server inserts the corresponding cellphone number into the data packet of the application protocol according to the corresponding relationship between the IP address and the user terminal, and subsequently transmits it to the corresponding service platform. Therefore, it can be ensured that the service platform can acquire the user's cellphone number and carry out the billing for the data service.

Because of the large number of the application layer protocols of data service, the proxy server must be able to support multiple application protocols in order to accomplish inserting the user's cellphone number into the data packages of different application protocols. If a new protocol appears, the proxy server will need to be upgraded, which will cause great cost, complicated upgrading procedure and long engineering period, and urgently needs further improvement.

EP 0 924 630 A1 discloses a method of downloading resources to a client from a content server over a data network. A resource request message is sent from the client and is intercepted at a proxy located in the data network between the client and the content server. A header request is sent from the proxy to the content server, requesting the content server to transmit a header, associated with the requested resource, to the proxy. The header is received at the proxy which determines whether or not the header contains billing and/or access restrictions. In the event that the header does contain billing and/or access restrictions, the client's right to receive the requested resource is authenticated and, providing the client is authenticated, the resource request message is delivered from the proxy to the content server and subsequently the resource is downloaded from the content server to the client.

US 2002/138601 A1 discloses a method for providing a content service to a subscriber terminal from a first server, i.e. content server.

The provision of the content service from the content server to the subscriber terminal is controlled by a second server, i.e. proxy. The control comprises the following steps: 1) determining a billing address for the content service by means of the proxy; 2) under the control of the content billing proxy, providing a content service corresponding to a service request from the content server to the subscriber terminal; and 3) generating billing information related to the content service.

### Summary of the Invention

An object of the present invention is to provide a method for ensuring the service platform the acquisition of the user terminal information under multiple application protocols, wherein by adding the step of sending the general application protocol request to the proxy server before the client terminal's normal service request, it is ensured that the service platform is still capable of acquiring user's cellphone number without upgrading the proxy server, so that it avoids the problem of frequent upgrading for equipments caused by new application protocol's appearance.

The problem to be solved of the present invention is achieved by following technical solution:
a method for ensuring the service platform the acquisition of the user terminal information under multiple application protocols, wherein the a client terminal service connection software is set in the user terminal or the user card, said client terminal service connection software has a service connection user interface and is able to inspect and control the mobile service connection carried out by the mobile terminal;
said method comprises the following steps: the user establishes the service request on the mobile terminal; the mobile terminal sends the connection establishment request to the mobile network; the mobile network assigns an IP address to the user , and sets up the corresponding relationship between the IP address and the user's cellphone number after it has received the connection establishment request; the mobile network sends the corresponding relationship between the IP address and the user's cellphone number to the proxy server; the proxy server sends the response information to the mobile network after it has received the corresponding relationship between the IP address and the user's cellphone number; the mobile network sends the response information of the connection successfully established to the mobile terminal, and sends the IP address assigned to the user to the mobile terminal after the mobile network has received the response information of the proxy server; the mobile terminal initiates the general application protocol request to the mobile network; the mobile network transmits the received general application protocol request to the proxy server; the proxy server inserts the corresponding cellphone number into the data package of the general application protocol request according to the corresponding relationship between the IP address and the user's cellphone number after it has received the general application protocol request; the proxy server transmits the data package of the general application protocol request including the corresponding cellphone number to the service platform; after the service platform received the data package of the general application protocol request, sends the response information to the proxy server; the proxy server transfers the response information to the mobile network; the mobile network transfers the response information to the mobile terminal; the mobile terminal determines whether the connection is established successfully after it has received the response information; if not, go to the step 7; if so, the next step follows; the mobile terminal sends the service request to the mobile network; the mobile network transmits the service request to the service platform after it has received the service request.

By adding the step of sending the general application protocol request to the proxy server before the client terminal's normal service request, the present invention ensures that the service platform is still capable of acquiring user's cellphone number without upgrading the proxy server, so that it avoids the problem of frequent upgrading for equipments caused by new application protocol's appearance, solves the problem how to allow the service platform to acquire the user's cellphone number for billing on the condition of new protocol's appearance without upgrading the proxy server, enhances the billing capability of the network operator, decreases the billing cost, increases the adaptability to upgrading of the application protocols, reduces the network rebuilding cost, increases the flexibility of the management for terminals, and improves the service serving level and the user's feelings.

### Brief Description of the Drawings

FIG.1 is the work flow chart of the prior art.
FIG.2 is the sketch illustrating the system architecture of the present invention.
FIG.3 is the work flow chart of the embodiment of the present invention.

### Detailed Description of the Preferred Embodiments

The solution provided by the present invention will be better understood from the following detailed description of preferred embodiments of the present invention referring to the drawings.

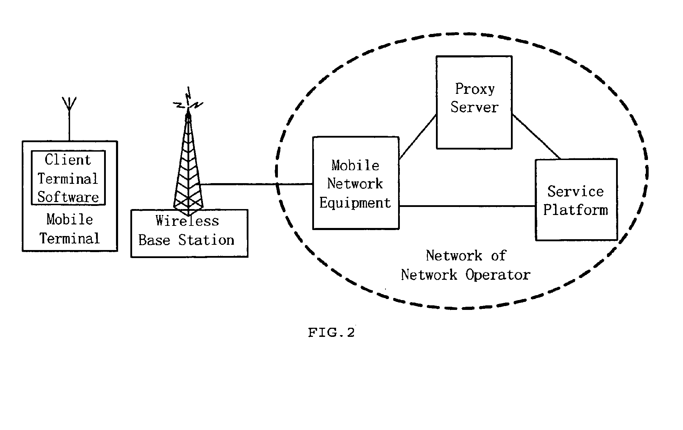

FIG.2 illustrates the system architecture of the present invention, which comprises the mobile terminal, the wireless base station and the network of operator, wherein the network of operator comprises the mobile network equipment, the proxy server, and the service platform, with the mobile network equipment comprising the mobile gateway and so on. The wireless base station is connected with the mobile network equipment by cable, and the mobile network equipment is connected with the proxy server and the service platform by cable. The wireless base station receives information from and sends information to the mobile terminal wirelessly, and the information of the mobile terminal is delivered by the wireless base station to the mobile network equipment by cable and afterwards is delivered by the mobile network equipment to the proxy server and the service platform by cable. Meanwhile, the wireless base station receives the response information sent by the proxy server and the service platform for the mobile terminal through the mobile network equipment. The client terminal service connection software is set in the mobile terminal or the user card, which comprises the service connection user interface and is able to inspect and control the mobile service connection carried out by the mobile terminal.

According to the present invention, it is required that the mobile terminal and the service platform must be able to support not only the corresponding service application protocols such as the SIP protocol, the RTP protocol and so on, but also a general application protocol, for instance the HTTP protocol. However, the proxy server only needs to support the general application protocol for instance the HTTP protocol, and there is no need for the proxy server to provide additional support to the new service application protocol according to the new service's appearance, which avoids the frequent upgrading of the proxy server due to the new service application protocol's appearance.

In the present invention, the client terminal service connection software is set in the user terminal or the user card, which comprises the service connection user interface and is able to inspect and control the mobile service connection carried out by the mobile terminal. The client terminal program sends the general application protocol request to the proxy server before initiating the service request, and the proxy server inserts the cellphone number into the data packet of the general application protocol and then transmits the data packet to the service platform. In the present invention, by adding the step of sending the general application protocol request to the proxy server before the client terminal's normal service request, it is ensured that the service platform is still capable of acquiring the user' s cellphone number without upgrading the proxy server, so that it avoids the problem of frequent upgrading for equipments caused by new application protocol' s appearance. It should be pointed out that the general application protocol request additionally transmitted to the proxy server before the client terminal initiates normal service request, is automatically transmitted by the client terminal without user's involvement, and won't cause any inconvenience to the user in terms of process and procedure.

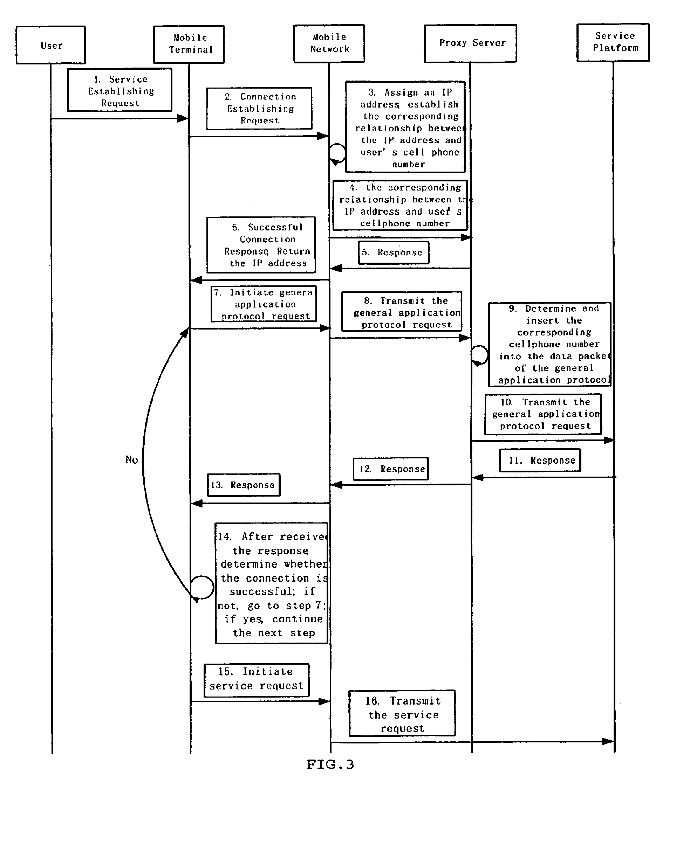

As shown in FIG. 3, it illustrates a work flow chart of an embodiment of the present invention, which is a method for ensuring the service platform the acquisition of the user terminal information under multiple application protocols comprises following steps:
Step 1: the user establishes the service request on the mobile terminal;
Step 2: the mobile terminal sends the connection establishment request to the mobile network;
Step 3: the mobile network assigns an IP address to the user, and sets up the corresponding relationship between the IP address and the user's cellphone number after it has received the connection establishment request;
Step 4: the mobile network sends the corresponding relationship between the IP address and the user's cellphone number to the proxy server;
Step 5: the proxy server sends the response information to the mobile network after it has received the corresponding relationship between the IP address and the user's cellphone number;
Step 6: the mobile network sends the response information of the connection successfully established to the mobile terminal, and sends the IP address assigned to the user to the mobile terminal after it has received the response information of the proxy server;
Step 7: the mobile terminal initiates the general application protocol request to the mobile network and begins to time simultaneously; if, the mobile terminal doesn't receive the response that the service platform has already successfully obtained the user's cellphone number returned from the mobile network within the set waiting period T, the mobile terminal compares the times m of the initiated general application protocol request with the set maximal pushing times N; if m is less than N, the step 7 is repeated; if m equals N, the mobile terminal displays the connection failure information on the screen to inform the user; wherein the waiting period T is set by the mobile terminal, and the maximal pushing time N is at least twice and is set by the mobile terminal;
Step 8: the mobile network transmits the received general application protocol request to the proxy server;
Step 9: the proxy server inserts the corresponding cellphone number into the data package of the general application protocol request according to the corresponding relationship between the IP address and the user's cellphone number after it has received the general application protocol request;
Step 10: the proxy server transmits the data package of the general application protocol request including the corresponding cellphone number to the service platform;
Step 11: the service platform sends the response information to the proxy server after it has received the data package of the general application protocol request;
Step 12: the proxy server transfers the response information to the mobile network;
Step 13: the mobile network transfers the response information to the mobile terminal;
Step 14: the mobile terminal determines whether the connection is established successfully after it has received the response information; if yes, the next step follows; if not, the mobile terminal compares the times m of the initiated general application protocol request with the set maximal pushing times N; if m is less than N, go to the step 7; if m equals N, the mobile terminal displays the connection failure information on the screen to inform the user; wherein the waiting period T is set by the mobile terminal, and the maximal pushing times N is at least twice and is set by the mobile terminal;
Step 15: the mobile terminal sends the service request to the mobile network; and
Step 16: the mobile network transmits the service request to the service platform after it has received the service request.

For example, a user initiates the mobile chatting service request which adopts the SIP protocol, but the proxy server only supports the HTTP protocol and can only parse the HTTP protocol.

After receiving the service request sent by the user, the mobile chatting client terminal program initiates the connection establishment request to the mobile network immediately. After receiving this request, the mobile gateway assigns an IP address to the user, establishes the corresponding relationship between the IP address and the user's cellphone number, and sends this corresponding relationship to the proxy server so that the proxy server acquires the corresponding relationship between the IP address and the user's cellphone number, and then sends a response to the mobile gateway. The mobile gateway returns the assigned IP address to the terminal after receiving the response.

The terminal initiates the HTTP request automatically after receiving the response. After receiving the request, the proxy server parses the HTTP protocol, inserts the user's cellphone number corresponding to this IP address into the field of the HTTP protocol's packet head, and then transmits this HTTP request to the mobile chatting service platform. Because the HTTP protocol belongs to a general application protocol, the service platform can parse the HTTP's packet head and reads the user's cellphone number. Therefore, the service platform can bill for the service usage of the user based on the user's cellphone number.

After finishing the above operations, the service platform sends a response to the terminal. After receiving the response, the terminal determines whether the connection is successful; if not, the terminal resends the HTTP request; and it is not until the terminal receives the success response that the client terminal program begins the chatting service and initiates the SIP protocol request.

Finally, it should be understood that the above embodiments are only used to explain, but not to limit the technical solution of the present invention. In despite of the detailed description of the present invention with referring to above preferred embodiments, it should be understood that various modifications, changes or equivalent replacements can be made by those skilled in the art without departing from the spirit and scope of the present invention and covered in the claims of the present invention.

## Claims

1. A method for ensuring the service platform the acquisition of the user terminal information under multiple application protocols, wherein a client terminal service connection software is set in the user terminal or the user card, said client terminal service connection software has a service connection user interface and is able to inspect and control the mobile service connection carried out by the mobile terminal, and said method comprises the following steps:
Step 1: the user establishes the service request on the mobile terminal;
Step 2: the mobile terminal sends the connection establishment request to the mobile network;
Step 3: the mobile network assigns an IP address to the user , and sets up the corresponding relationship between the IP address and the user's cellphone number after it has received the connection establishment request;
Step 4: the mobile network sends the corresponding relationship between the IP address and the user's cellphone number to the proxy server;
Step 5: the proxy server sends the response information to the mobile network after it has received the corresponding relationship between the IP address and the user's cellphone number;
Step 6: the mobile network sends the response information of the connection successfully established to the mobile terminal, and sends the IP address assigned to the user to the mobile terminal after the mobile network has received the response information of the proxy server;
**characterized in that** the method further comprises the following steps:
Step 7: the mobile terminal initiates the general application protocol request to the mobile network;
Step 8: the mobile network transmits the received general application protocol request to the proxy server;
Step 9: the proxy server , inserts the corresponding cellphone number into the data package of the general application protocol request according to the corresponding relationship between the IP address and the user's cellphone number after it has received the general application protocol request;
Step 10: the proxy server transmits the data package of the general application protocol request including the corresponding cell phone number to the service platform;
Step 11: the service platform sends the response information to the proxy server after it has received the data package of the general application protocol request;
Step 12: the proxy server transfers the response information to the mobile network;
Step 13: the mobile network transfers the response information to the mobile terminal;
Step 14: the mobile terminal determines whether the connection is established successfully after it has received the response information; if not, go to the step 7; if yes, the next step follows;
Step 15: the mobile terminal sends the service request to the mobile network; and
Step 16: the mobile network transmits the service request to the service platform after it has received the service request.

2. The method for ensuring the service platform the acquisition of the user terminal information under multiple application protocols as claimed in claim 1, **characterized in that** said step 7 specifically comprises that:
the mobile terminal initiates the general application protocol request to the mobile network and begins to time simultaneously; if, the mobile terminal doesn't receive the response that the service platform has already successfully obtained the user's cellphone number returned from the mobile network within the set waiting period T, the mobile terminal compares the times m of the initiated general application protocol request with the set maximal pushing times N; if m is less than N, the step 7 is repeated; if m equals N, the mobile terminal displays the connection failure information on the screen to inform the user.

3. The method for ensuring the service platform the acquisition of the user terminal information under multiple application protocols as claimed in claim 2, **characterized in that** said waiting period T is set by the mobile terminal.

4. The method for ensuring the service platform the acquisition of the user terminal information under multiple application protocols as claimed in claim 2, **characterized in that** said maximal pushing times N is at least twice and is set by the mobile terminal.

5. The method for ensuring the service platform the acquisition of the user terminal information under multiple application protocols as claimed in claim 1, 2, 3 or 4, **characterized in that** said step 14 specifically comprises that:
after the mobile terminal has received the response information, the mobile terminal determines whether the connection is established successfully; if yes, the next step follows; if not, the mobile terminal compares the times m of the initiated general application protocol request with the set maximal pushing times N; if m is less than N, go to the step 7; if m equals N, the mobile terminal displays the connection failure information on the screen to inform the user.

6. The method for ensuring the service platform the acquisition of the user terminal information under multiple application protocols as claimed in claim 5, **characterized in that** said waiting period T is set by the mobile terminal.

7. The method for ensuring the service platform the acquisition of the user terminal information under multiple application protocols as claimed in claim 5, **characterized in that** said maximal pushing times N is at least twice and is set by the mobile terminal.

## Patentansprüche

1. Verfahren zum Sicherstellen, dass die Dienst-Plattform die Benutzeranschluss-Information unter mehreren Anwendungsprotokollen erfasst, wobei eine Kundenanschluss-Dienstverbindungs-Software in dem Benutzeranschluss oder der Benutzerkarte eingerichtet ist, wobei die Kundenanschluss-Dienstverbindungs-Software eine Dienstverbindungs-Benutzerschnittstelle aufweist und in der Lage ist, die Mobilfunk-Dienstverbindung, welche durch das mobile Endgerät ausgeführt wird, zu überprüfen und zu steuern, und wobei das Verfahren die folgenden Schritte umfasst:
Schritt 1: der Benutzer erstellt die Dienstanfrage auf dem mobilen Endgerät;
Schritt 2: das mobile Endgerät sendet die Verbindungserstellungs-Anfrage an das Mobilfunknetz;
Schritt 3: das Mobilfunknetz weist dem Benutzer eine IP-Adresse zu und legt die entsprechende Beziehung zwischen der IP-Adresse und der Mobiltelefonnummer des Benutzers fest, nachdem es die Verbindungserstellungs-Anfrage empfangen hat;
4: das Mobilfunknetz sendet die entsprechende Beziehung zwischen der IP-Adresse und der Telefonnummer des Benutzers an den Proxy-Server;
Schritt 5: der Proxy-Server sendet die Antwortinformation an das Mobilfunknetz, nachdem er die entsprechende Beziehung zwischen der IP-Adresse und der Telefonnummer des Benutzers empfangen hat;
Schritt 6: das Mobilfunknetz sendet die Antwortinformation, dass die Verbindung erfolgreich erstellt wurde, an das mobile Endgerät und sendet die IP-Adresse, welche dem Benutzer zugewiesen ist, an das mobile Endgerät, nachdem das Mobilfunknetz die Antwortinformation des Proxy-Servers empfangen hat;
**dadurch gekennzeichnet, dass** das Verfahren darüber hinaus die folgenden Schritte umfasst:
Schritt 7: das mobile Endgerät initiiert die allgemeine Anwendungsprotokoll-Anfrage an das Mobilfunknetz;
Schritt 8: das Mobilfunknetz überträgt die empfangene allgemeine Anwendungsprotokoll-Anfrage an den Proxy-Server;
Schritt 9: der Proxy-Server fügt die entsprechende Mobiltelefonnummer in das Datenpaket der allgemeinen Anwendungsprotokoll-Anfrage gemäß der entsprechenden Beziehung zwischen der IP-Adresse und der Mobiltelefonnummer des Benutzers ein, nachdem er die allgemeine Anwendungsprotokoll-Anfrage empfangen hat;
Schritt 10: der Proxy-Server überträgt das Datenpaket der allgemeinen Anwendungsprotokoll-Anfrage, welche die entsprechende Mobiltelefonnummer aufweist, an die Dienst-Plattform;
Schritt 11: die Dienst-Plattform sendet die Antwortinformation an den Proxy-Server, nachdem sie das Datenpaket der allgemeinen Anwendungsprotokoll-Anfrage empfangen hat;
Schritt 12: der Proxy-Server überträgt die Antwortinformation an das Mobilfunknetz;
Schritt 13: das Mobilfunknetz überträgt die Antwortinformation an das mobile Endgerät;
Schritt 14: das mobile Endgerät entscheidet, ob die Verbindung erfolgreich erstellt worden ist, nachdem es die Antwortinformation empfangen hat; wenn nicht, gehe zu Schritt 7; wenn ja, setze mit dem nächsten Schritt fort;
Schritt 15: das mobile Endgerät sendet die Dienstanfrage an das Mobilfunknetz; und
Schritt 16: das Mobilfunknetz überträgt die Dienstanfrage an die Dienst-Plattform, nachdem es die Dienstanfrage empfangen hat.

2. Verfahren zum Sicherstellen, dass die Dienst-Plattform die Benutzeranschluss-Information unter mehreren Anwendungsprotokollen erfasst, nach Anspruch 1, **dadurch gekennzeichnet, dass** der Schritt 7 genauer umfasst, dass:
das mobile Endgerät die allgemeine Anwendungsprotokoll-Anfrage an das Mobilfunknetz initiiert und gleichzeitig beginnt, zeitlich zu bestimmen; wenn das mobile Endgerät die Antwort nicht innerhalb der bestimmten Wartezeit T empfängt, dass die Dienst-Plattform bereits erfolgreich die Mobiltelefonnummer des Benutzers erhalten hat, welche von dem mobilen Netz zurückgesendet wird, das mobile Endgerät die Versuche m der initiierten allgemeinen Anwendungsprotokoll-Anfrage mit der vorbestimmten maximalen Durchführungs-Anzahl N vergleicht; wenn m kleiner als N ist, wird der Schritt 7 wiederholt; wenn m gleich N ist, zeigt das mobile Endgerät die Verbindungsfehler-Information auf dem Bildschirm an, um den Benutzer zu informieren.

3. Verfahren zum Sicherstellen, dass die Dienst-Plattform die Benutzeranschluss-Information unter mehreren Anwendungsprotokollen erfasst, nach Anspruch 2, **dadurch gekennzeichnet, dass** die Wartezeit T durch das mobile Endgerät eingestellt wird.

4. Verfahren zum Sicherstellen, dass die Dienst-Plattform die Benutzeranschluss-Information unter mehreren Anwendungsprotokollen erfasst, nach Anspruch 2, **dadurch gekennzeichnet, dass** die maximale Durchführungs-Anzahl N zumindest zwei ist und durch das mobile Endgerät eingestellt wird.

5. Verfahren zum Sicherstellen, dass die Dienst-Plattform die Benutzeranschluss-Information unter mehreren Anwendungsprotokollen erfasst, nach Anspruch 1, 2, 3 oder 4, **dadurch gekennzeichnet, dass** der Schritt 14 genauer umfasst, dass:
nachdem das mobile Endgerät die Antwortinformation empfangen hat, das mobile Endgerät entscheidet, ob die Verbindung erfolgreich erstellt worden ist; wenn ja, wird mit dem nächsten Schritt fortgesetzt; wenn nein, vergleicht das mobile Endgerät die Versuche m der initiierten allgemeinen Anwendungsprotokoll-Anfrage mit der vorbestimmten maximalen Durchführungs-Anzahl N; wenn m kleiner als N ist, gehe zu Schritt 7; wenn m gleich N ist, zeigt das mobile Endgerät die Verbindungsfehler-Information auf dem Bildschirm an, um den Benutzer zu informieren.

6. Verfahren zum Sicherstellen, dass die Dienst-Plattform die Benutzeranschluss-Information unter mehreren Anwendungsprotokollen erfasst, nach Anspruch 5, **dadurch gekennzeichnet, dass** die Wartezeit T durch das mobile Endgerät eingestellt wird.

7. Verfahren zum Sicherstellen, dass die Dienst-Plattform die Benutzeranschluss-Information unter mehreren Anwendungsprotokollen erfasst, nach Anspruch 5, **dadurch gekennzeichnet, dass** die maximale Durchführungs-Anzahl N mindestens zwei ist und durch das mobile Endgerät eingestellt wird.

## Revendications

1. Procédé pour assurer à la plate-forme de services l'acquisition des informations d'un terminal d'utilisateur sous de multiples protocoles d'applications, dans lequel un logiciel de connexion à des services de terminal client est installé dans le terminal d'utilisateur ou la carte d'utilisateur, ledit logiciel de connexion à des services de terminal client a une interface utilisateur de connexion à des services et peut vérifier et commander la connexion au service mobile effectuée par le terminal mobile, et ledit procédé comporte les étapes suivantes :
Etape 1 : l'utilisateur établit la demande de service sur le terminal mobile ;
Etape 2 : le terminal mobile envoie au réseau mobile la demande d'établissement de connexion ;
Etape 3 : le réseau mobile, après avoir reçu la demande d'établissement de connexion, attribue une adresse IP à l'utilisateur et crée la relation correspondante entre l'adresse IP et le numéro du téléphone cellulaire de l'utilisateur ;
Etape 4 : le réseau mobile envoie au serveur cache la relation correspondante entre l'adresse IP et le numéro du téléphone cellulaire de l'utilisateur ;
Etape 5 : le serveur cache, après avoir reçu la relation correspondante entre l'adresse IP et le numéro du téléphone cellulaire de l'utilisateur, envoie au réseau mobile les informations de réponse;
Etape 6 : le réseau mobile envoie au terminal mobile les informations de réponse indiquant la réussite de l'établissement de la connexion et, après que le réseau mobile a reçu les informations de réponse du serveur cache, envoie au terminal mobile l'adresse IP attribuée à l'utilisateur ;
le procédé étant **caractérisé en ce qu'**il comporte en outre les étapes suivantes :
Etape 7 : le terminal mobile lance la demande, au réseau mobile, du protocole général d'application ;
Etape 8 : le réseau mobile transmet au serveur cache la demande de protocole général d'application reçue ;
Etape 9 : le serveur cache, après avoir reçu la demande de protocole général d'application, insère le numéro de téléphone cellulaire correspondant dans l'ensemble de données de la demande de protocole général d'application d'après la relation correspondante entre l'adresse IP et le numéro du téléphone cellulaire de l'utilisateur ;
Etape 10 : le serveur cache transmet à la plate-forme de services l'ensemble de données de la demande de protocole général d'application, dont le numéro de téléphone cellulaire correspondant ;
Etape 11 : la plate-forme de services, après avoir reçu l'ensemble de données de la demande de protocole général d'application, envoie les informations de réponse au serveur cache ;
Etape 12 : le serveur cache transmet au terminal mobile les informations de réponse ;
Etape 13 : le réseau mobile transmet au terminal mobile les informations de réponse ;
Etape 14 : le terminal mobile, après avoir reçu les informations de réponse, détermine si, oui ou non, l'établissement de la connexion a réussi ; dans la négative, on passe à l'étape 7 ; dans l'affirmative, c'est l'étape suivante qui lui succède ;
Etape 15 : le terminal mobile envoie la demande de service au réseau mobile ; et
Etape 16 : le réseau mobile, après avoir reçu la demande de service, transmet la demande de service à la plate-forme de services.

2. Procédé selon la revendication 1 pour assurer à la plate-forme de services l'acquisition des informations d'un terminal d'utilisateur sous de multiples protocoles d'applications, **caractérisé en ce que** ladite étape 7 comprend spécifiquement le fait que :
le terminal mobile lance la demande de protocole général d'application au réseau mobile et commence simultanément à compter le temps ; si le terminal mobile ne reçoit pas la réponse selon laquelle la plate-forme de services a déjà réussi à obtenir le numéro du téléphone cellulaire de l'utilisateur renvoyé par le réseau mobile dans les limites du délai d'attente fixé T, le terminal mobile compare le nombre m de fois où la demande de protocole général d'application est lancée avec le nombre maximal d'appuis fixé N ; si m est inférieur à N, l'étape 7 est répétée ; si m est égal à N, le terminal mobile, pour informer l'utilisateur, affiche sur l'écran l'information d'échec de connexion.

3. Procédé selon la revendication 2 pour assurer à la plate-forme de services l'acquisition des informations d'un terminal d'utilisateur sous de multiples protocoles d'applications, **caractérisé en ce que** ledit délai d'attente T est fixé par le terminal mobile.

4. Procédé selon la revendication 2 pour assurer à la plate-forme de services l'acquisition des informations d'un terminal d'utilisateur sous de multiples protocoles d'applications, **caractérisé en ce que** ledit nombre maximal N d'appuis est au moins de deux et est fixé par le terminal mobile.

5. Procédé selon la revendication 1, 2, 3 ou 4 pour assurer à la plate-forme de services l'acquisition des informations d'un terminal d'utilisateur sous de multiples protocoles d'applications, **caractérisé en ce que** ladite étape 14 comprend spécifiquement le fait que :
après que le terminal mobile a reçu les informations de réponse, le terminal mobile détermine si, oui ou non, l'établissement de la connexion a réussi ; dans l'affirmative, c'est l'étape suivante qui lui succède ; dans la négative, le terminal mobile compare le nombre m de fois où la demande de protocole général d'application est lancée avec le nombre maximal d'appuis fixé N ; si m est inférieur à N, on passe à l'étape 7 ; si m est égal à N, le terminal mobile, pour informer l'utilisateur, affiche sur l'écran l'information d'échec de connexion.

6. Procédé selon la revendication 5 pour assurer à la plate-forme de services l'acquisition des informations d'un terminal d'utilisateur sous de multiples protocoles d'applications, **caractérisé en ce que** ledit délai d'attente T est fixé par le terminal mobile.

7. Procédé selon la revendication 5 pour assurer à la plate-forme de services l'acquisition des informations d'un terminal d'utilisateur sous de multiples protocoles d'applications, **caractérisé en ce que** ledit nombre maximal N d'appuis est au moins de deux et est fixé par le terminal mobile.
